# EUROPÄISCHE PATENTANMELDUNG

(11) **EP 2 636 970 A1**
(43) Veröffentlichungstag der Anmeldung: **11.09.2013**
(21) Anmeldenummer: 13158640.6
(22) Anmeldetag: 11.03.2013
(51) Int. Cl.: F24J 2/52, F24J 2/46

(54) **Befestigungssystem**

(30) Priorität: 09.03.2012 US 201261608667 P
(71) Anmelder: Fleschhutz, Walter, 87647 Unterthingau (DE)
(72) Erfinder: Fleschhutz, Walter, 87647 Unterhingau (DE)
(74) Vertreter: Isarpatent

(57) **Zusammenfassung**

Ein Befestigungssystem zum Befestigen eines Montageelements in einer Aufnahme einer Befestigungseinrichtung, insbesondere in einem Aufnahmekanal einer Befestigungsschiene zum Befestigen von Solarmodulen, aufweisend:
eine Halterung, in welcher ein Klemmelement drehbar aufgenommen ist, wobei das Klemmelement in der Halterung zwischen einer Entriegelungsposition, in welcher die Halterung mit dem Klemmelement in die Aufnahme einführbar ist, und einer Verriegelungsposition drehbar ist, in welcher die Halterung mit dem Klemmelement in der Aufnahme verklemmbar oder verriegelbar ist.

## Beschreibung

### GEBIET DER ERFINDUNG

Ein Befestigungssystem, insbesondere zum Befestigen wenigstens einer Befestigungsschiene und eines Solarmoduls an einem Gebäudedach.

### TECHNISCHER HINTERGRUND

Bisher werden Solarmodule mit Befestigungsschienen an Gebäudedächern befestigt. Dazu sind jedoch eine Vielzahl von Einzelteilen notwendig, die aufwändig montiert und gegebenenfalls auch wieder demontiert werden müssen.

### ZUSAMMENFASSUNG DER ERFINDUNG

Vor diesem Hintergrund liegt der Erfindung die Aufgabe zugrunde, ein verbessertes Befestigungssystem bereitzustellen.

Erfindungsgemäß wird diese Aufgabe durch ein Befestigungssystem mit den Merkmalen des Anspruchs 1 gelöst.

### Demgemäß ist vorgesehen:

Ein Befestigungssystem zum Befestigen eines Montageelements in einer Aufnahme einer Befestigungseinrichtung, insbesondere in einem Aufnahmekanal einer Befestigungsschiene zum Befestigen von Solarmodulen, aufweisend: eine Halterung, in welcher ein Klemmelement drehbar aufgenommen ist, wobei das Klemmelement in der Halterung zwischen einer Entriegelungsposition, in welcher die Halterung mit dem Klemmelement in die Aufnahme einführbar ist, und einer Verriegelungsposition drehbar ist, in welcher die Halterung mit dem Klemmelement in der Aufnahme verklemmbar oder verriegelbar ist.

Vorteilhafte Ausgestaltungen und Weiterbildungen ergeben sich aus den weiteren Unteransprüchen sowie aus der Beschreibung unter Bezugnahme auf die Figuren der Zeichnung.

### INHALTSANGABE DER ZEICHNUNGEN

Die vorliegende Erfindung wird nachfolgend anhand der in den schematischen Figuren der Zeichnungen angegebenen Ausführungsbeispiele näher erläutert. Es zeigen dabei:
Fig. 1 eine Explosionsdarstellung eines Ausführungsbeispiels eines erfindungsgemäßen Befestigungssystems und einer Befestigungseinrichtung;
Fig. 2 eine Rückansicht einer Halterung und eines Klemmelements gemäß dem Ausführungsbeispiel nach Fig. 1, wobei das Klemmelement in seiner Ausgangsposition ist;
Fig. 3 eine Rückansicht der Halterung und des Klemmelements gemäß Fig. 2, wobei das Klemmelement in seiner Verriegelungsposition ist;
Fig. 4 eine Perspektivansicht von an einem Gebäudedach mittels Befestigungsschienen und dem erfindungsgemäßen Befestigungssystem befestigen Solarmodulen;
Fig. 5 ein Zusammenbaudarstellung einer Befestigungsschiene und daran befestigen Montagelementen mittels des erfindungsgemäßen Befestigungssystems;
Fig. 6A eine Explosionsdarstellung der Mittelklemme und ihrer Befestigung;
Fig. 6B die Mittelklemme und ihre Befestigung gemäß Fig. 6A, wobei die Mittelklemme und ihre Befestigung zusammengebaut sind;
Fig. 7 eine Perspektivansicht einer Befestigungsschiene und einer darin aufgenommenen Halterung mit einem Klemmelement sowie ein weiteres Klemmelement, welches in einer Verriegelungsposition gezeigt ist;
Fig. 8 eine Perspektivansicht einer Halterung und eines darin aufgenommenen Klemmelements gemäß dem Ausführungsbeispiel nach Fig. 1;
Fig. 9 eine Perspektivansicht eines Montageelements und seiner Befestigung;
Fig. 10 eine Perspektivansicht eines weiteren Montageelements und seiner Befestigung;
Fig. 11 eine Perspektivansicht zweier Befestigungsschienen die mittels eines Montagelements über Kreuz miteinander verbunden sind;
Fig. 12 eine schematische Perspektivansicht eines weiteren Montagelements zur Befestigung mittels eines erfindungsgemäßen Befestigungssystems; und
Fig. 13 eine Tabelle von Beispielen für eine Halterung und Schraubenelementen zur Befestigung einer derartigen Halterung und eines darin aufgenommenen Klemmelements gemäß Ausführungsbeispielen der Erfindung.

Die beiliegenden Zeichnungen sollen ein weiteres Verständnis von Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausführt ist - jeweils mit denselben Bezugszeichen versehen.

### BESCHREIBUNG VON AUSFÜHRUNGSBEISPIELEN

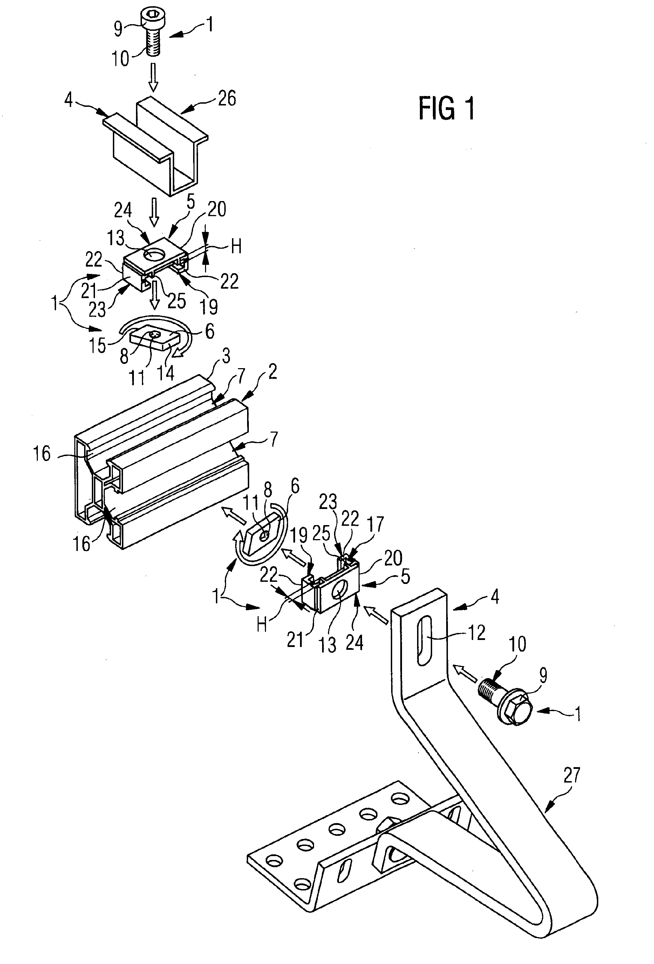

In Fig. 1 ist eine Explosionsdarstellung eines Ausführungsbeispiels eines erfindungsgemäßen Befestigungssystems 1 und einer Befestigungseinrichtung 2, hier z.B. einer Befestigungsschiene 3, gezeigt.

Solche Befestigungssysteme 1 werden dazu eingesetzt Montageelemente 4 an einer Befestigungsschiene 3 zu befestigen, um beispielsweise die Befestigungsschiene 3 mittels des Montageelements 4 auf einem Gebäudedach zu befestigen und/oder um mehrere Solarmodule mittels der Montageelemente 4 an der Befestigungsschiene zu befestigen und wahlweise zusätzlich miteinander zu verbinden zum Ausbildung einer Fläche von mehreren Solarmodulen auf dem Gebäudedach.

Das Befestigungssystem 1 gemäß der Erfindung weist eine Halterung 5 auf zum Aufnehmen eines Klemmelements 6 und zum Verklemmen des Klemmelements 6 in einer Aufnahme 7 der Befestigungseinrichtung 2, hier der Befestigungsschiene 3. Das Klemmelement 6 weist dabei in dem in Fig. 1 gezeigten Ausführungsbeispiel die Form eines Parallelogramms oder Rhomboids auf.

Zum Verdrehen des Klemmelements 6 in der Halterung 5 weist das Klemmelement 6 eine Gewindebohrung 8 auf, z.B. eine Gewindedurchgangsbohrung oder ein Sackloch mit einem Gewinde (nicht dargestellt) usw., zum Aufnehmen eines Schraubenelements 9. Das Schraubenelement 9 weist dabei ein anderes Gewinde 10 auf als das Gewinde 11 der Gewindebohrung 8 des Klemmelements 6, wobei das Gewinde 10 des Schraubenelements 9 derart gewählt ist, dass das Schraubenelement 9 mit seinem Gewinde 10 in das Gewinde 11 der Gewindebohrung 8 einarbeitbar, fest eindrehbar oder einformbar ist und dabei ein Drehen oder Mitdrehen des Klemmelements 6 in eine Verriegelungsposition erlaubt. In der Verriegelungsposition ist das Klemmelement 6 in der Aufnahme 7 der Befestigungsschiene 3 festgeklemmt und bildet mit der Aufnahme 7 beispielsweise eine Reibschlussverbindung.

Mittels des Schraubenelements 9 und der Halterung 5 mit ihrem Klemmelement 6 kann ein Montageelement 4 sehr einfach in einer Aufnahme 7, beispielsweise einem Aufnahmekanal wie in dem Ausführungsbeispiel in Fig. 1, einer Befestigungsschiene 3 befestigt werden. Dazu wird das Schraubenelement 9 zunächst durch eine Öffnung 12 oder Bohrung des Montageelements 4 und anschließend durch eine Öffnung 13 der Halterung 5 hindurchgeführt und in die Gewindebohrung 8 des Klemmelements 6 eingeführt und derart eingearbeitet, feste eingedreht oder eingeformt, dass das Klemmelement 6 dabei in seine Verriegelungsposition drehbar ist. Dadurch kann das Klemmelement 6 in der Aufnahme 7 in die Verriegelungsposition gedreht werden und das Montageelement 4 fest mit der Befestigungsschiene 3 verbinden, ohne dass das Klemmelement 5 und das mit ihm verbundene Montageelement 4 sich ungewollt in der Aufnahme 7 bewegen können, beispielsweise in Längsrichtung des Aufnahmekanals der Befestigungsschiene 3 in Fig. 1.

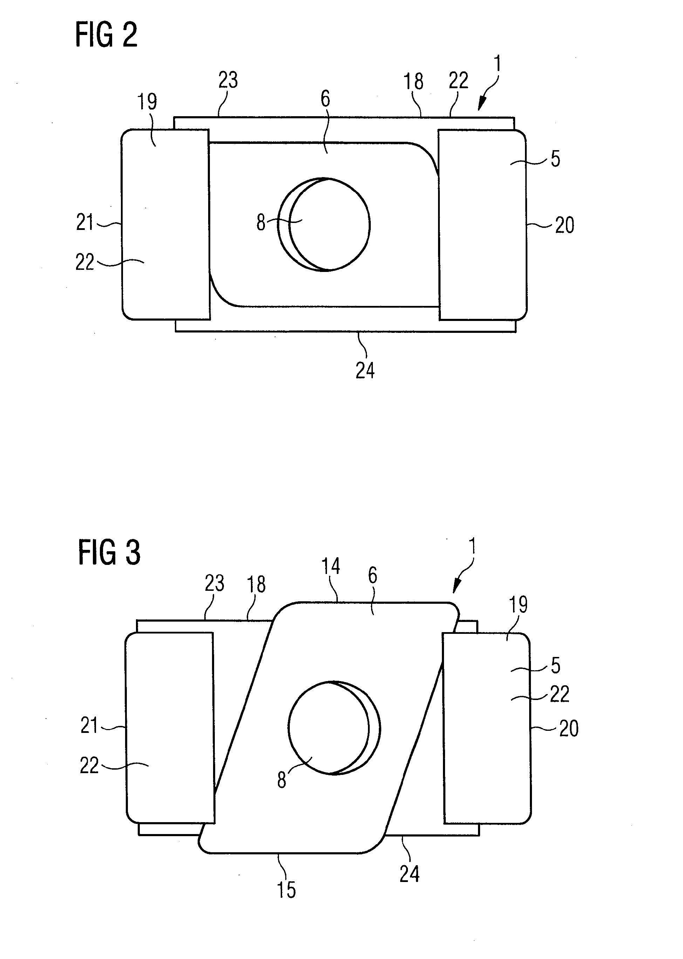

Wie in dem Ausführungsbeispiel in den nachfolgenden Fig. 2 und 3 noch detaillierter gezeigt ist, ist das Klemmelement 6 in einer Ausgangsposition in der Halterung 5 z.B. vollständig oder zumindest soweit aufgenommen, dass es in die Aufnahme 7 mit der Halterung 5 zusammen eingeführt werden kann. Das Klemmelement 6 steht in der Ausgangsposition dem entsprechend nicht aus der Halterung 5 heraus oder nicht soweit heraus, dass es nicht mehr in die Aufnahme 7 der Befestigungseinrichtung 2 einführbar ist. In dieser Ausgangsposition ist die Halterung 5 mit dem Klemmelement 6 in eine Aufnahme 7, z.B. ein Aufnahmekanal oder eine andere Vertiefung, der Befestigungsschiene 3 einführbar. Ist die Halterung 5 mit dem Klemmelement 6 in die Aufnahme 7 der Befestigungsschiene 3 eingeführt, kann das Schraubenelement 9 beispielsweise zunächst mit einem Montageelement 4 verbunden und anschließend zusammen mit dem Montageelement 4 mit dem Klemmelement 6 verbunden werden. Wie zuvor beschrieben wird das Schraubenelement 9 mit seinem Gewinde 10 in das Gewinde 11 der Gewindebohrung 8 des Klemmelements 6 eingearbeitet und das Klemmelement 6 dabei von seiner Ausgangsposition in die Verriegelungsposition gedreht. Dadurch wird das Klemmelement 6 in der Aufnahme 7 festgeklemmt und mit ihm das Montageelement 4. Dabei liegt das Klemmelement 6 beispielsweise flächig, insbesondere vollflächig, mit seinen beiden gegenüberliegenden Ende 14, 15 an der Innenwand 16 der Aufnahme 7 der Befestigungsschiene 3 an und bildet mit dieser z.B. eine Reibschlussverbindung.

Die Halterung 5 zur Aufnahme des Klemmelements 6 ist in dem in Fig. 1 gezeigten Ausführungsbeispiel derart ausgebildet, dass das Klemmelement 6 in der Ausgangsposition zum Einführen in eine Aufnahme 7 einer Befestigungsschiene 3 beispielsweise vollständig aufgenommen ist und nicht aus der Halterung heraussteht. Des Weiteren ist die Halterung 5 derart ausgebildet, dass beim Drehen des Klemmelements 6, dieses an einem oder beiden Enden 14, 15 aus der Halterung 5 herausdrehbar ist, um mit der Aufnahme 7 in Eingriff gebracht und in der Aufnahme 7 festgeklemmt zu werden.

Die Halterung 5 ist dabei optional zusätzlich derart ausgebildet, dass das Klemmelement 6 in der Halterung 5 mittels einer Führungen 17 geführt ist, wenn es von seiner Ausgangsposition in seine Verriegelungsposition gedreht wird. Die Führung 17 kann dabei zusätzlich derart ausgebildet sein, dass das Klemmelement 6 in einer vorbestimmten oder definierten Ebene der Halterung 5 geführt ist, um zu verhindern, dass das Klemmelement 6 in der Halterung 5 verkippt und sich dadurch verklemmen kann.

Wie in dem Ausführungsbeispiel in Fig. 1 gezeigt ist, weist die Halterung 5 ein Vorderwand 18 und eine Rückwand 19 auf, die an den Seiten 20, 21 miteinander verbunden sind. Die Vorderwand 18 ist mit einer Öffnung 13 oder Bohrung versehen zum Durchführen eines Schraubenelements 9 und Einführen desselben in die Gewindebohrung 8 des in der Halterung 5 aufgenommenen Klemmelements 6. Die Rückwand 19 der Halterung 5 ist, wie in dem Ausführungsbeispiel in Fig. 1 gezeigt ist, beispielweise vollständig geschlossen (nicht dargestellt) oder teilweise derart geöffnet, dass das Klemmelement 6 nicht ungewollt an der Rückseite der Halterung 5 aus dieser herausrutschen kann. Wie in dem Ausführungsbeispiel in Fig. 1 gezeigt ist, weist die Rückwand 19 auf beiden Seiten jeweils einen Rückwandabschnitt 22 auf, mit der das Klemmelement 6 an der Rückseite der Halterung 5 gehalten wird, so dass das Klemmelement 6 auf der Rückseite nicht ungewollt aus der Halterung 5 herausrutschen kann. Der Bereich zwischen den beiden Rückwandabschnitten 22 ist dagegen z.B. offen und frei zugänglich. Grundsätzlich kann, wie zuvor beschrieben, die Rückseite auch geschlossen ausgebildet sein (nicht dargestellt).

Das Klemmelement 6 wird beim Drehen von seiner Ausgangsposition in seine Verriegelungsposition teilweise aus der Halterung 5 herausgedreht, um sich in einer Aufnahme 7, beispielsweise einer Befestigungsschiene 3, zu verklemmen. Die Halterung 5 ist dabei in dem in Fig. 1 gezeigten Ausführungsbeispiel auf den Seiten 23, 24, auf denen das Klemmelement 6 aus der Halterung 5 herausgedreht wird, teilweise offen ausgebildet, derart, dass das Klemmelement 6 einerseits aus der Halterung 5 herausdrehbar ist, ohne ungewollt aus der Halterung 5 herauszurutschen, und andererseits zur Montage in die Halterung 5 einführbar ist. Das Klemmelement 6 muss zunächst in die Halterung 5 über einen der teilweise offenen Seiten 23, 24 in die Halterung 5 eingeführt und in die Ausgangsposition gedreht werden, bevor es anschließend nach dem Einführen der Halterung 5 und des Klemmelements 6 in einer Aufnahme 7, z.B. einer Befestigungsschiene 3, über ein Schraubenelement 9 in seine Verriegelungsposition bewegt wird.

Des Weiteren weist die Halterung 5 in dem Ausführungsbeispiel in Fig. 1 optional eine Führung 17 auf, zum Führen des Klemmelements 6 in der Halterung 5 zwischen seiner Ausgangsposition oder Entriegelungsposition, in welcher das Klemmelement 6 und seine Halterung 5 in eine Aufnahme 7, z.B. einer Befestigungsschiene 3, einführbar oder aus dieser wieder entnehmbar sind, und seiner Verriegelungsposition. Die Führung 17 ist dabei z.B. auf der Innenseite der Rückwand 19 und/oder der Vorderwand 18 vorgesehen und derart ausgebildet, dass das Klemmelement 6 durch die Führung 17 zwischen der Ausgangsposition und der Verriegelungsposition führbar oder drehbar ist. Des Weiteren ist die Führung 17 derart ausgebildet, dass das Klemmelement 6 in einer definierten Ebene, beispielsweise einer Ebene, die parallel oder im Wesentlichen parallel zu der Rückwand 19 bzw. Vorderwand 18 der Halterung 5 ist, geführt wird, um ein Verkanten oder Verkippen des Klemmelements 6 in der Halterung 5 zu verhindern, wenn dieses zwischen seiner Ausgangsposition und seiner Verriegelungsposition gedreht wird. In dem in Fig. 1 gezeigten Ausführungsbeispiel ist z.B. auf der Innenseite der Vorderwand 18 auf beiden Seiten jeweils ein Führungsabschnitt oder -steg 25 vorgesehen, welcher sich beispielsweise entlang der Seiten 20, 21 der Halterung 5 erstreckt und mit dem Klemmelement 6 in Kontakt oder Verbindung ist, während dieses zwischen seiner Ausgangsposition und Verriegelungsposition bewegt wird. Die Höhe H des Führungsabschnitts oder -stegs 25 kann derart gewählt werden, dass das Klemmelement 6 zwischen dem Führungsabschnitt oder -steg 25 und der Rückwand 19 gehalten oder optional zusätzlich einklemmbar ist und zwischen seiner Ausgangsposition und seiner Verriegelungsposition drehbar ist.

Die Halterung 5 ist beispielsweise aus einem Kunststoffmaterial hergestellt, z.B. einem POM-Werkstoff oder Gleitlagerwerkstoff. Das Klemmelement 6 ist beispielsweise wiederum aus Metall. Die Erfindung ist aber auf die genannten Materialien für die Halterung 5 und das Klemmelement 6 nicht beschränkt.

In dem in Fig. 1 gezeigten Ausführungsbeispiel ist eine Befestigungsschiene 3 mit mehreren Aufnahmekanälen 7 gezeigt, wobei die Befestigungsschiene 3 dabei eine varista® Montageschiene mit und ohne Kabelkanal in 50 und 50mm verwendet wird. Zur Befestigung der Befestigungsschiene 3 an einem Gebäudedach wird als Montageelement 4 ein varista® senkrechter Dachhaken 27, 8mm, mit einer einstellbaren Halshöhe von 30-60mm verwendet. Zum Befestigen wird durch eine Öffnung des Dachhakens ein Schraubenelement 9 geführt, hier z.B. eine Sechskantschraube mit einem Sperrzahlflansch (M8x20-25mm A2 oder M10x20-25mm, A2) Des Weiter wird eine Halterung 5 oder Montageclip mit einem Klemmelement 6 in Form einer M8 oder M10 Rhombusmutter verwendet.

Des Weiteren wird als Montageelement 4 zum Verbindung von Solarmodulen auf der Befestigungsschiene 3 eine Mittelklemme 26 (25-50mm), als Schraubenelement 9 eine Imbusschraube M8x20-50 und eine Halterung 5 oder Montageclip mit einem Klemmelement 6 in Form einer M8 oder M10 Rhombusmutter verwendet.

In den Fig. 2 und 3 sind die Halterung und das Klemmelement gemäß dem Ausführungsbeispiel in Fig. 1 gezeigt. Fig. 2 zeigt dabei das Klemmelement in seiner Ausgangsposition und Fig. 3 das Klemmelement in seiner Verriegelungsposition.

Wie zuvor mit Bezug auf Fig. 1 detailliert beschrieben wurde, ist die Rückwand 19 der Halterung 5 beispielsweise teilweise offen ausgebildet und weist auf gegenüberliegenden Seiten jeweils einen Rückwandabschnitt 22 auf, zum Halten des Klemmelements 6, so dass dieses nicht ungewollt auf der Rückseite der Halterung 5 herausrutschen kann. Wie in dem Ausführungsbeispiel in Fig. 2 gezeigt ist, ist das Klemmelement 6 in seiner Ausgangsposition, in welcher es mit der Halterung 5 in einer zugeordneten Aufnahme 7, z.B. einer Befestigungsschiene 3, einführbar oder aufnehmbar ist, vollständig in der Halterung 5 aufgenommen.

Um das Klemmelement 6 in seine Verriegelungsposition zu drehen, wird ein Schraubenelement durch die Öffnung 13 in der Vorderwand 18 der Halterung 5 geführt und in die Gewindeöffnung 8 des Klemmelements 6 eingeführt. Durch das Eindrehen, Einarbeiten oder Einformen des Schraubenelements mit seinem Gewinde in die Gewindeöffnung 8 des Klemmelements 6 wird eine feste Verbindung von Schraubenelement und Klemmelement 6 hergestellt, um das Klemmelement 6 kann durch Drehen des Schraubenelements in seine Verriegelungsposition gedreht oder mitgedreht werden.

Wie in Fig. 3 gezeigt ist, wird das Klemmelement 6 in seiner Verriegelungsposition beispielsweise an beiden Enden 14, 15 aus der Halterung 5 herausgedreht. Die Halterung 5 ist dazu an diesen beiden Seiten 23, 24 teilweise offen ausgebildet, so dass das Klemmelement 6 einerseits in der Halterung 5 zunächst montiert und anschließend zum Verriegeln mit seinen Enden 14, 15 aus der Halterung 6 herausgeschwenkt werden kann und andererseits verhindert wird, dass das Klemmelement 6 hierbei ungewollt seitlich aus der Halterung 5 wieder herausrutschen kann.

Das Klemmelement 6 liegt mit den Oberflächen seiner Enden 14, 15 flächig, insbesondere vollflächig, an einer Innenwand einer Aufnahme oder Befestigungsaufnahme einer Befestigungseinrichtung, wie einer Befestigungsschiene, an und bildet z.B. mit dieser eine Reibschlussverbindung.

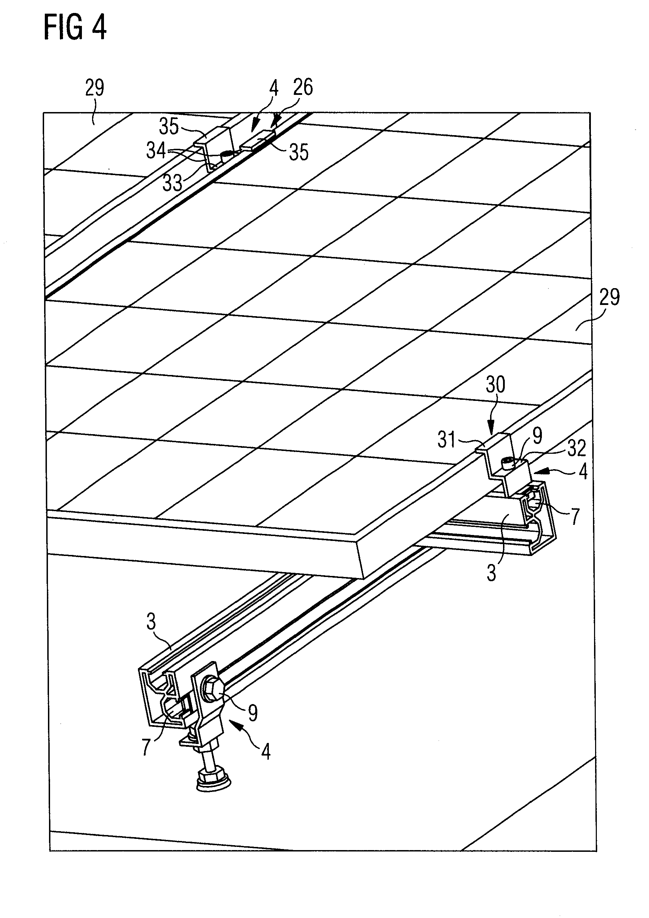

In Fig. 4 ist eine Perspektivansicht von an einem Gebäudedach 28 befestigen Solarmodulen 29 gezeigt. Die Solarmodule 29, beispielsweise plattenförmige Solarmodule, werden dabei mittels Befestigungsschienen 3 und dem erfindungsgemäßen Befestigungssystem 1 an dem Gebäudedach 28 befestigt und optional zusätzlich miteinander verbunden, beispielsweise mittels einer Mittelklemme 26, wie sie als Montageelement 4 in Fig. 1 gezeigt ist.

Wie in dem Ausführungsbeispiel in Fig. 4 gezeigt ist, wird eine Befestigungsschiene 3 zunächst an dem Gehäusedach 28 mittels eines Montageelements 4, z.B. einem Dachhaken 27 wie er zuvor in Fig. 1 gezeigt ist, oder einem anderen geeigneten Befestigungselement oder Kombination von Befestigungselementen befestigt. Das Montageelement 4 wird dazu an einem Ende am Gebäudedach 28 befestigt, z.B. verschraubt, und am anderen Ende an der Befestigungsschiene 3 mittels des erfindungsgemäßen Befestigungssystems 1 befestigt. Wie in Fig. 4 gezeigt ist, wird das Montagelement 4 über ein Schraubenelement 9 und eine Halterung 5 und dessen Klemmelement 6 in einer Aufnahme 7 der Befestigungsschiene 3 befestigt, durch Festklemmen des Klemmelements 6 in der Aufnahme 7. Die Befestigung mittels der Halterung 5, des Klemmelements 6 und dem Schraubenelement 9 hat den Vorteil, dass sie sehr einfach für einen Benutzer zu handhaben ist. Des Weiteren kann die Befestigung bei Bedarf auch sehr leicht wieder gelöst werden durch Drehen des Schraubenelements 9 und des mit ihm verbundenen Klemmelements 6 zurück in die Ausgangsposition. In der Ausgangsposition lässt sich die Halterung 5 zusammen mit dem Klemmelement 6, dem Schraubenelement 9 und dem daran vorgesehenen Montageelement 4 sehr einfach als ein Teil aus der Aufnahme 7 entfernen, ohne dass die Befestigung in Einzelteile zerlegt oder anderweitig demontiert werden muss.

Zum Befestigen eines Solarmoduls 29 an der Befestigungsschiene 3 wird als Montageelement 4 eine geeignet geformte Solarmodulhalterung 30 verwendet. Die Solarmodulhalterung 30, wie sie in dem Ausführungsbeispiel in Fig. 4 gezeigt ist, weist beispielsweise eine Stufenform, in Form von beispielsweise zwei Stufen 31, 32, auf. Das Solarmodul 29 wird dabei beispielsweise in der oberen Stufe 31 eingeführt und an der Befestigungsschiene 3 gehalten und mit der unteren Stufe 32 bzw. der Oberseite der Stufe 32 an der Befestigungsschiene 3 befestigt. Dazu wird ein Schraubenelement 9 durch eine Öffnung oder Bohrung an der Oberseite der Stufe 32 hindurchgeführt und in eine Gewindebohrung eines Klemmelements eingeführt. Das Klemmelement ist in einer zugeordneten Halterung in seiner Ausgangsposition angeordnet. Des Weiteren ist das Klemmelement mit seiner Halterung in der zugeordneten Aufnahme in der Befestigungsschiene 3 aufgenommen, so dass das Schraubenelement in die Gewindebohrung des Klemmelements eingearbeitet und mit diesem möglichst ausreichend fest verbunden werden kann, so dass das Klemmelement mittels des Schraubenelements in seine Verriegelungsposition gedreht werden kann. Dadurch wird die Solarmodulhalterung 30 an der Befestigungsschiene 3 befestigt und kann das Solarmodul 29 an der Befestigungsschiene 3 fixieren, wie in Fig. 4 gezeigt ist.

Benachbarte Solarmodule 29 können des Weiteren zusätzlich miteinander verbunden werden. Dazu wird als Montageelement 4 beispielsweise eine Mittelklemme 26 eingesetzt, wie sie zuvor in Fig. 1 gezeigt ist. Die Mittelklemme 26 weist in dem in Fig. 1 und 4 gezeigten Ausführungsbeispiel hierbei einen z.B. U-förmigen Querschnitt auf, mit einem Bodenabschnitt 33 und jeweils sich davon, z.B. senkrecht, nach oben erstreckenden Seitenabschnitten 34. Die Seitenabschnitte 34 weisen wiederum an ihrem Ende jeweils einen dazu, z.B. senkrecht, abgewinkelten Halteabschnitt 35 auf. Ein Solarmodul 29 wird dabei in befestigtem Zustand zwischen dem Halteabschnitt 35 und einer Oberseite der Befestigungsschiene 3 gehalten.

Zum Befestigen des Montageelements 4 werden zunächst die Halterung und deren Klemmelement in die Aufnahme auf der Oberseite des Befestigungsprofils 3 eingeführt. Das Klemmelement befindet sich dabei in seiner Ausgangsposition. Anschließend wird ein Schraubenelement 9 durch eine Öffnung oder Bohrung in dem Bodenabschnitt des Montageelements 4 hindurchgeführt und in die Gewindebohrung des Klemmelements eingeführt und eingearbeitet und dabei eine ausreichend feste Verbindung zwischen dem Schraubenelement und dem Klemmelement erzeugt zum Drehen des Klemmelements in seine Verriegelungsposition.

Bei Bedarf, kann das Schraubenelement 9 auch derart gedreht werden, dass das Klemmelement aus seiner Verriegelungsposition in seine Ausgangsposition oder im Wesentlichen in seine Ausgangsposition bewegt wird, um beispielsweise die Halterung mit dem Klemmelement und dem damit gekoppelten Montageelement 4 in einem Aufnahmekanal der Befestigungsschiene 3 in Längsrichtung des Aufnahmekanals zu verschieben. Das erfindungsgemäße Befestigungssystem 1 erlaubt somit ein sehr einfaches Nachjustieren oder Neupositionieren des Montageelements 4.

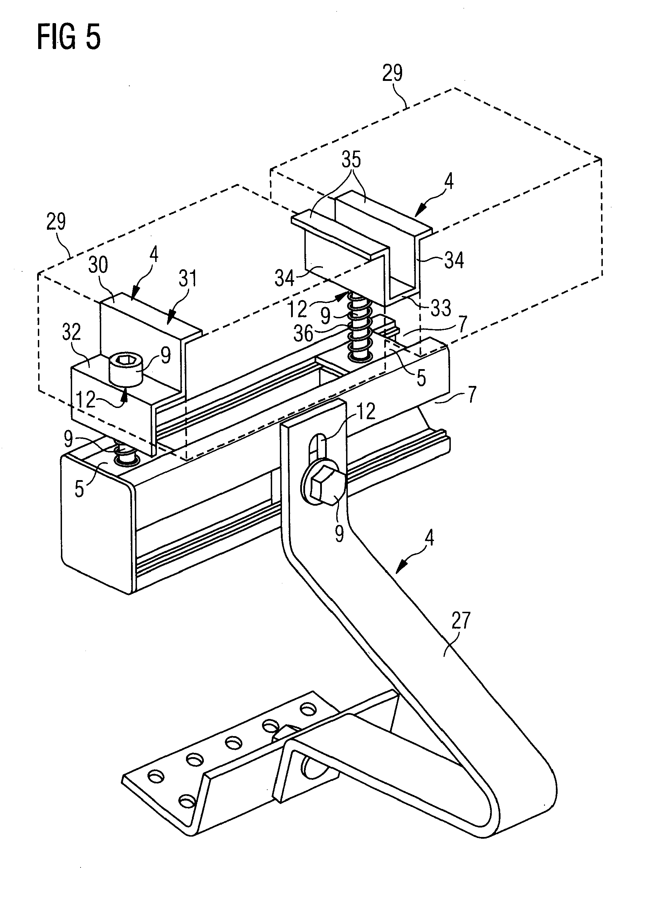

In Fig. 5 ist ein Zusammenbaudarstellung einer Befestigungsschiene 3 und daran mittels des erfindungsgemäßen Befestigungssystems 1 befestigter Montagelemente 4 gezeigt. Die Befestigungsschiene 3 weist einen seitlichen Aufnahmekanal 7 und des Weiteren einen Aufnahmekanal 7 an ihrer Oberseite auf. In dem seitlichen Aufnahmekanal 7 wird als Montageelement 4 beispielsweise varista® Dachhaken 27 mittels einer Halterung 5, deren Klemmelement 6 und einem Schraubenelement 9 befestigt. Mit dem Dachhaken 27 kann die Befestigungsschiene 3 dabei sehr leicht an Gebäudedächern befestigt werden. Des Weiteren ist als Montageelement 4 eine geeignet geformte Solarmodulhalterung 30 vorgesehen, wie sie zuvor in dem Ausführungsbeispiel in Fig. 4 gezeigt ist. Die in dem Ausführungsbeispiel in Fig. 5 gezeigte Solarmodulhalterung 30 weist eine Stufenform, in Form von beispielsweise zwei Stufen, auf. Die obere Stufe 31 umgreift dabei von außen in montiertem Zustand ein Solarmodul 29, wie mit einer gestrichelten Linie in Fig. 5 angedeutet ist. Zum Befestigen wird das Montageelement 4 mittels eines Schraubenelements 9, der Halterung 5 und ihres Klemmelements 6 in der Aufnahme 7 auf der Oberseite der Befestigungsschiene 3 befestigt. Im Falle von mehreren nebeneinander angeordneten Solarmodulen 29, wie mit einer gestrichelten Linie in Fig. 5 angedeutet ist, können diese mittels z.B. der Mittelklemme 26, wie sie in Fig. 5 und zuvor in Fig. 1 und 4 gezeigt ist, miteinander verbunden werden.

In dem in Fig. 5 gezeigten Ausführungsbeispiel des Befestigungssystems 1 kann optional zusätzlich ein Federelement 36, insbesondere eine Spiralfeder, um das Schraubenelement 9 und zwischen der Unterseite des Montageelements 4 (hier der Mittelklemme 26) und dem Klemmelement 6 vorgesehen sein. Dadurch kann das Montageelement 4 Toleranzen in senkrechter Richtung zu der Oberseite der Befestigungsschiene 3 ausgleichen. Ein derartiges Federelement 36 kann optional ebenfalls zwischen der Unterseite des Montageelements 4, hier der abgestuften Solarmodulhalterung 30, und dem Klemmelement 6 vorgesehen werden.

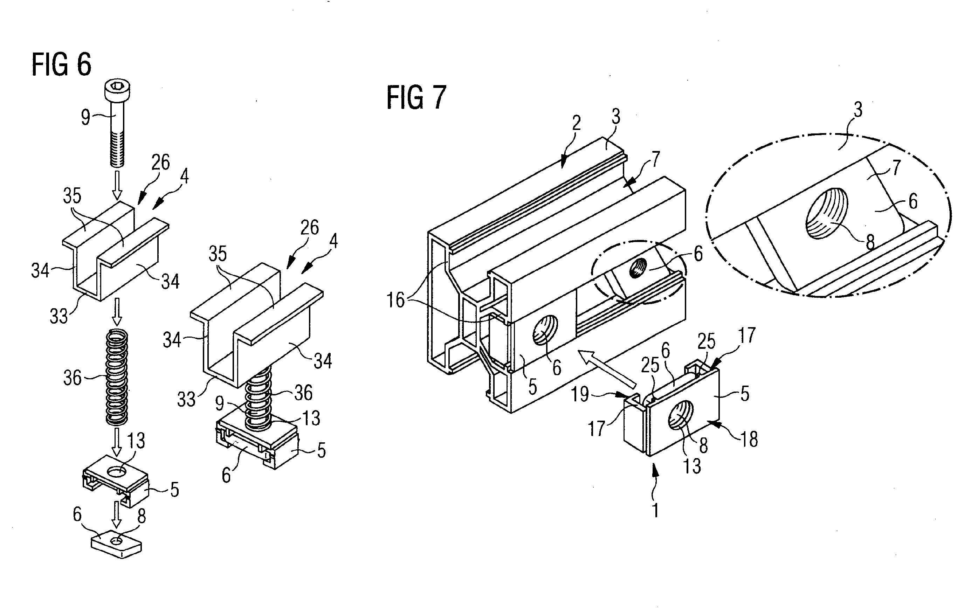

In Fig. 6A ist eine Explosionsdarstellung der Mittelklemme 26 und ihrer Befestigung gezeigt. Dabei ist eine Halterung 5 gezeigt, in welcher das Klemmelement 6 aufgenommen wird. Der Durchmesser der Gewindebohrung 8 des Klemmelements 6 ist dabei kleiner als der Durchmesser der Spiralfeder 36, welche zwischen der Unterseite der Mittelklemme 26 und dem Klemmelement 6 vorgesehen wird. Dem entsprechend ist der Durchmesser der Öffnung 13 oder Bohrung der Vorderwand 18 der Halterung 5 ausreichend groß, so dass neben dem Schraubenelement 9 auch das Federelement 36 hindurchgeführt werden kann, um sich schließlich mit einem Ende an dem Klemmelement 6 abzustützen. Das Schraubenelement 36 wird von Oberseite des Bodenabschnitts 33 der Mittelklemme 26 hindurchgeführt, wobei auf der Unterseite der Mittelklemme 26 das Federelement 36 auf das Schraubenelement 9 aufgesteckt wird und schließlich gegen das Klemmelement 6 geschraubt wird.

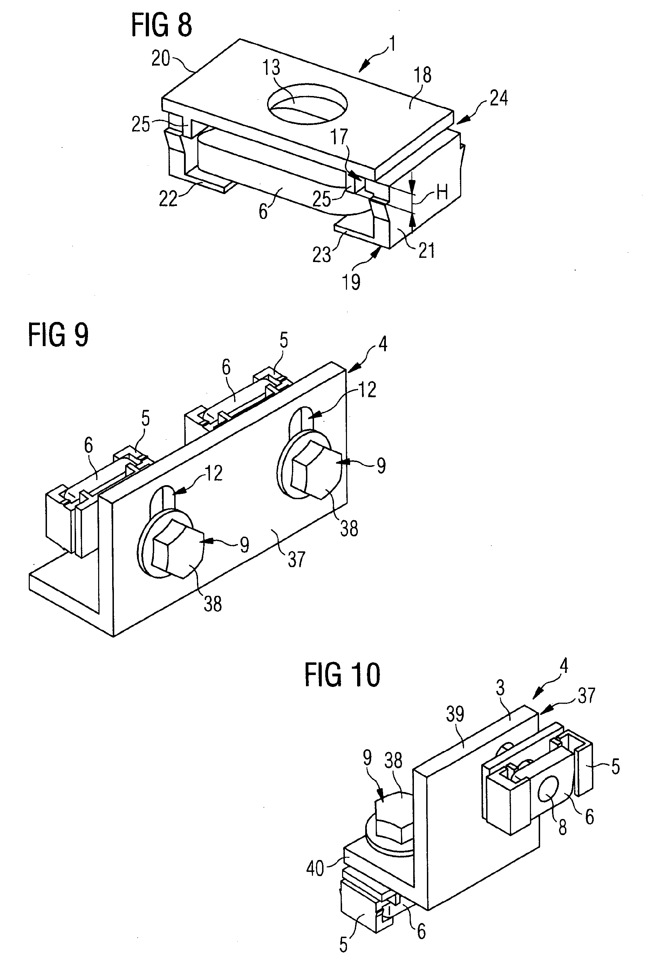

In Fig. 6B ist die in Fig. 6A gezeigte Mittelklemme 26 mit dem Befestigungssystem 1 verbunden. Dabei ist das Schraubenelement 9 in der Gewindeöffnung des Klemmelements 6 eingearbeitete, so dass das Schraubenelement 9 das Klemmelement 6 von seiner Ausgansposition in Fig. 6B in seine Verrieglungsposition drehen kann. Das Befestigungssystem 1 der Erfindung hat den Vorteil, dass die komplett montierte Mittelklemme 26 nur noch in eine zugeordnete Befestigungsaufnahme einer Befestigungseinrichtung (z.B. Aufnahmekanal einer Befestigungsschiene wie in nachfolgender Fig. 8 gezeigt ist) eingeführt und anschließend das Schraubenelement 9 soweit gedreht werden muss, bis sich das mit ihm verbundenen Klemmelement 6 in seiner Verriegelungsposition befindet. Bei Bedarf kann das Schraubenelement 9 auch so gedreht werden, dass das Klemmelement 6 wieder in seiner Ausgangposition ist. In dieser Position kann entweder die Mittelklemme 26 als ein Beispiel für ein Montageelement 4 aus der Befestigungsaufnahme entnommen oder in einem Aufnahmekanal, wie in nachfolgender Fig. 7 gezeigt ist verschoben werden. Das Befestigungssystem 1 stellt somit eine sehr einfach zu handhabende Befestigung dar, da sie keine vollständige Demontage oder Teildemontage erfordert, um aus einer Befestigungseinrichtung entfernt oder an der Befestigungseinrichtung neu positioniert zu werden.

In Fig. 7 ist eine Perspektivansicht einer Befestigungsschiene 3 gezeigt und einer in einer Aufnahme 7 der Befestigungsschiene 3 aufgenommene Halterung 5 mit einem Klemmelement 6. Des Weiteren ist in der Aufnahme 7 zusätzlich noch ein weiteres Klemmelement 6 ohne eine Halterung gezeigt zum besseren Verständnis. Fig. 7 dient zur Verdeutlichung, dass die Halterung 5 in der Aufnahme 7 in Längsrichtung verschoben werden kann, da das Klemmelement 6 sich in seiner Ausgansposition befindet. Sobald das Klemmelement 6 in seine Verriegelungsposition gedreht wird, wie durch das zweite Klemmelement 6 gezeigt wird, kann die Halterung 5 durch ihr Klemmelement 6 in der Aufnahme 7 fixiert werden. Die Halterung 5 mit dem Klemmelement 6 kann dann nicht mehr in Längsrichtung des Aufnahmekanals 7 ungewollt verschoben werden. Der vergrößerte Ausschnitt in Fig. 7 zeigt ebenfalls nochmals das zweite Klemmelement 6 in seiner Verriegelungsposition. Aus Gründen der Übersichtlichkeit wurde bei dem zweiten Klemmelement 6 die Halterung weggelassen.

In Fig. 8 ist eine Perspektivansicht einer Halterung 5 und deren Klemmelements 6 gemäß dem in Fig. 1 gezeigten und beschriebenen Ausführungsbeispiel eines erfindungsgemäßen Befestigungssystems 1 gezeigt.

Wie in Fig. 8 gezeigt ist, weist die Vorderwand 18 der Halterung 5 eine Öffnung 13 oder Bohrung auf, die ausreichend groß ist, so dass ein zugeordnetes Schraubenelement und optional ein um das Schraubenelement angeordnetes Federelement, z.B. eine Spiralfeder, hindurchführbar ist. Die Vorder- und Rückwand 18, 19 sind auf zwei gegenüberliegenden Seiten 20, 21 miteinander verbunden. Des Weiteren sind die einander gegenüberliegenden Seiten 23, 24 der Halterung 5, aus denen das Klemmelement 6 in seine Verriegelungsposition herausgedreht wird, teilweise offen oder freigelassen derart, dass das Klemmelement 6 von einer oder beiden Seiten 23, 24 her in die Halterung 5 einführbar und darin montierbar, sowie anschließend in seine Verriegelungsposition drehbar ist und andererseits das Klemmelement 6 zu keiner der Seiten 23, 24 ungewollt herausrutschen kann.

Des Weiteren ist beispielsweise auf der Innenseite der Vorderwand 18 auf beiden Seiten jeweils ein Führungsabschnitt oder -steg 25 vorgesehen, zum Führen des Klemmelements 6 zwischen seiner Ausgangsposition oder Entriegelungsposition und seiner Verriegelungsposition. Die Höhe H des Führungsabschnitts 25 kann dabei derart gewählt sein, dass kein Spalt oder ein definierter Spalt S zwischen dem Klemmelement 6 und der Halterung 5 vorliegt. In dem Fall, dass z.B. kein Spalt oder nur ein kleiner Spalt vorhanden ist wird sichergestellt, dass sich das Klemmelement 6 in einer vorbestimmten definierten Ebene oder im Wesentlichen vorbestimmten Ebene drehen kann. Dadurch kann ein ungewolltes Verkippen und gegebenenfalls Verklemmen des Klemmelements 6 in der Halterung 5 vermieden werden.

In Fig. 9 ist eine Perspektivansicht eines weiteren Ausführungsbeispiels eines Montageelements 4 gezeigt zum Verbinden mit einer Befestigungseinrichtung mittels des erfindungsgemäßen Befestigungssystems 1. Das Montageelement 4 weist eine L-Form auf. Es kann aber ebenso auch beispielsweise eine T-Form aufweisen oder eine andere Form, je nach Funktion und Eisatzzweck. Dies gilt für alle Ausführungsformen der Erfindung und insbesondere alle Ausführungsbeispiele wie sie in den Fig. 1 bis 8 und 10 bis 12 gezeigt sind. Des Weiteren weist wenigstens ein Abschnitt des Montageelements 4 wenigstens eine Öffnung 12, z.B. eine Bohrung oder wie in Fig. 9 gezeigt ist ein Langloch auf, zum Hindurchführen eines Schraubenelements 9. Wie zuvor bereits mit Bezug auf die Fig. 1 bis 8 beschrieben wurde, wird das Schraubenelement 9 in eine Gewindeöffnung eines in einer Halterung 5 aufgenommenen Klemmelements 6 eingearbeitete, um eine Verbindung oder möglichst feste Verbindung zwischen dem Schraubenelement 9 und dem Klemmelement 6 zu erreichen. Durch Drehen des Schraubenelements 9, kann das Klemmelement 6 zwischen einer Ausgangs- oder Entriegelungsposition und einer Verriegelungsposition bewegt oder gedreht werden. Des Weiteren kann wenigstens ein Abschnitt der Montageeinrichtung 4 beispielsweise glatt oder eine Riffelung 37 aufweisen. In dem in Fig. 9 gezeigten Ausführungsbeispiel, weist die Seite des Montagelements 4 eine Riffelung 37 auf, an welcher das Schraubenelement 9 mit seinem Schraubenkopf 38 anliegt. Der Schraubenkopf 38 kann an seiner Unterseite dabei glatt oder ebenfalls mit einer Riffelung versehen sein. Im Falle einer geriffelten Unterseite des Schraubenkopfs 38 entsteht beim Befestigen des Montageelements 4 mittels des Schraubenelements 38, sowie der Halterung 5 und deren Klemmelements 6, eine besonders feste Verbindung zwischen dem Schraubenkopf 38 und der geriffelten Fläche des Montageelements 4, so dass ein ungewolltes Drehen bzw. Verdrehen des Schraubenkopfs 38, beispielsweise in Richtung einer Ausgangsposition des Klemmelements 6, zusätzlich entgegengewirkt oder verhindert werden kann.

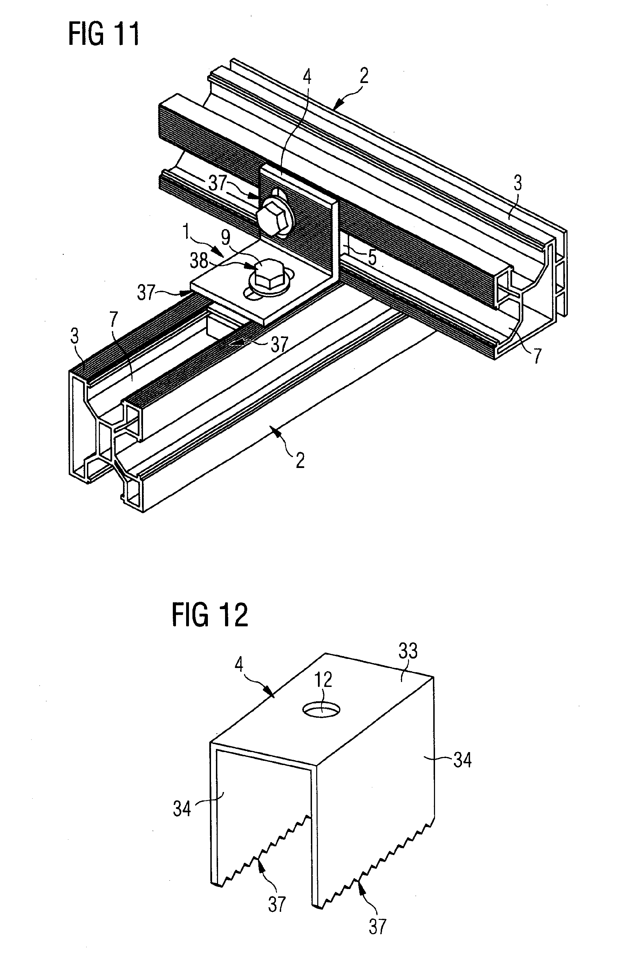

In Fig. 10 ist des Weiteren ein Montageelement 4 gezeigt zum Befestigen zweier Befestigungsschienen. Die Befestigungsschienen können mittels des Montagelements und des erfindungsgemäßen Befestigungssystems beispielsweise über Kreuz aneinander befestigt werden, wie in nachfolgender Fig. 11 gezeigt ist.

Das Montageelement 4 ist dabei ebenfalls ein L-förmiges Montageelement 4, wie das Montageelement in Fig. 9 zuvor. Das Montageelement 4 weist an beiden zueinander abgewinkelten Abschnitten 39, 40, z.B. senkrecht oder in einem anderen Winkel zueinander abgewinkelte Abschnitte, wenigstens eine Öffnung 12 auf zum Hindurchführen eines Schraubenelements 9. Ein Schraubenelement 9 kann dabei bereits vor dem Einführen der Halterung 5 und ihres Klemmelements 6 in den Aufnahmekanale einer der Befestigungsschienen bereits mit der Halterung 5 und deren Klemmelement 6 verbunden sein. Dazu wird das Schraubenelement 9, wie zuvor beschrieben, in eine Gewindebohrung 8 des Klemmelements 6 eingearbeitet. Das Montageelement 4 kann so mit der Halterung 5 und dessen Klemmelement 6 in der Aufnahme der Befestigungsschiene aufgenommen und bei Bedarf gleich befestig werden durch Drehen des Klemmelements 6 mittels des Schraubenelements 9 in seine Verriegelungsposition. Des Weiteren wird in die Aufnahme der anderen Befestigungsschiene eine Halterung 5 mit ihrem Klemmelement 6 eingeführt. Anschließend wird ein Schraubenelement 9 durch die Öffnung des anderen Abschnitts des Montageelements 4 hindurch und in die Gewindebohrung des Klemmelements 6 in der Halterung 5 eingearbeitet, so dass eine ausreichend feste Verbindung zwischen dem Schraubenelement 9 und dem Klemmelement 6 erzielt wird, um das Klemmelement 6 in seine Verriegelungsposition zu drehen.

Hierbei kann nun, wie in dem Ausführungsbeispiel in Fig. 11 gezeigt ist, die Befestigungseinrichtung 2, hier die Befestigungsschiene 3, und/oder das Montageelement 4 wenigstens einen Abschnitt mit einer Riffelung 37 oder einer glatten Oberfläche aufweisen. Beispielsweise können die Außenseite der Befestigungseinrichtung 2 und wenigstens eine Seite wenigstens eines Abschnitts des Montageelements 4 mit einer Riffelung 37 oder einer glatten Oberfläche versehen sein. Die Riffelung 37 des Montageelements 4, der Befestigungseinrichtung 2 und/oder der Unterseite eines Schraubenkopfs 38 eines Schraubenelements 9 können identisch sein und beispielsweise die Riffelung 37 von Montagelement 4, Befestigungseinrichtung 2 bzw. Schraubenkopfunterseite ineinander greifen oder die Riffelungen 37 können auch eine unterschiedliche Dimensionierung, Querschnitt, Form und/oder Orientierung aufweisen.

In Fig. 12 ist eine schematische Perspektivansicht eines weiteren Montagelements 4 zur Befestigung mittels eines erfindungsgemäßen Befestigungssystems 1 gezeigt. Das Montageelement 4 weist dabei beispielsweise eine U-Form auf, wobei die Enden des U-förmigen Montagelements mit einer Riffelung 37 versehen sind. Das Montagelement 37 weist einen Bodenabschnitt 33 auf, von welchem auf beiden Seiten jeweils ein Seitenabschnitt 34 sich nach oben erstreckt, beispielsweise senkrecht nach oben erstreckt. Wie in dem Ausführungsbeispiel in Fig. 1 gezeigt ist, ist beispielsweise wenigstens eine Öffnung 12 in dem Bodenabschnitt 33 vorgesehen zum Hindurchführen eines Schraubenelements. Ein solches Schraubenelement wird, wie zuvor mit Bezug auf andere Ausführungsbeispiele beschrieben wurde, wiederum durch eine Öffnung in einer Halterung und in eine Gewindebohrung eines in der Halterung aufgenommenen Klemmelements eingeführt und in diese eingearbeitet. Mittels der Riffelung 37 an den Enden oder Endkanten der Seitenabschnitte 34 kann das Montageelement 4 in einer entsprechend geriffelten Oberfläche einer Befestigungseinrichtung oder eines anderen Montagelements aufgenommen und dadurch zusätzlich in seiner Position fixiert und ein ungewolltes Verdrehen des Montagelements 4 verhindert werden.

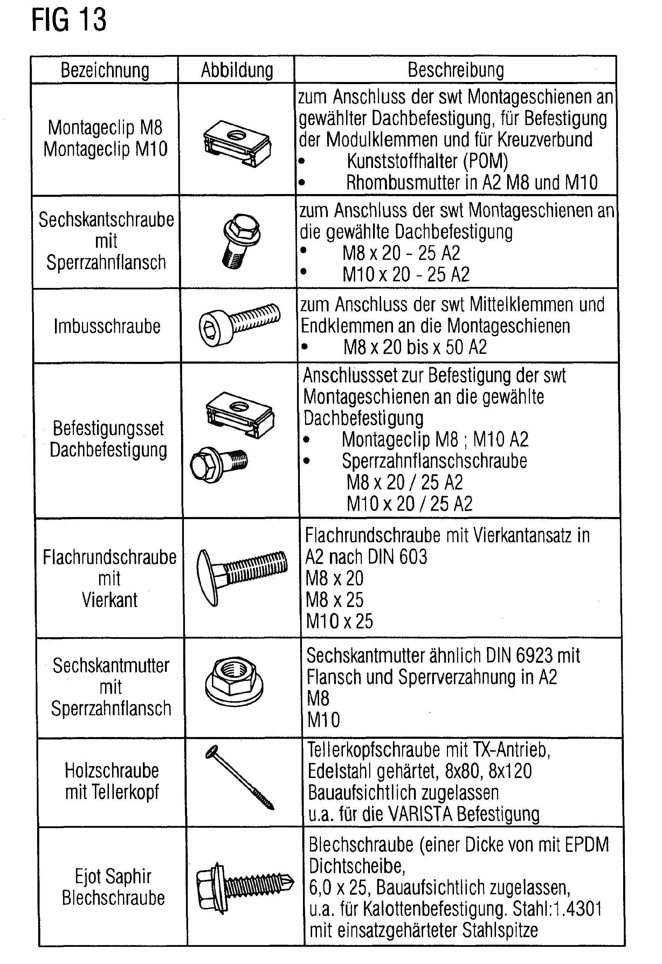

In Fig. 13 ist außerdem eine Tabelle von Beispielen für eine Halterung und Schraubenelementen zur Befestigung einer derartigen Halterung und eines darin aufgenommenen Klemmelements gemäß Ausführungsbeispielen der Erfindung gezeigt.

Als Schraubenelemente können sowohl Sechskantschrauben mit einem Sperrzahnflansch, Inbusschrauben, Flachrundschrauben mit z.B. einem Vierkant, Sechskantmuttern mit einem Sperrzahnflansch, Holzschrauben mit einem Tellerkopf, sowie Blechschrauben wie, z.B. eine Ejot Saphir Blechschraube eingesetzt werden.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Insbesondere sind die zuvor beschriebenen Ausführungsformen auch miteinander kombinierbar, insbesondere einzelne Merkmale hiervon.

### Bezugszeichenliste

| | |
|---|---|
| 1 | Befestigungssystem |
| 2 | Befestigungseinrichtung |
| 3 | Befestigungsschiene |
| 4 | Montageelement |
| 5 | Halterung |
| 6 | Klemmelement |
| 7 | Aufnahme |
| 8 | Gewindebohrung |
| 9 | Schraubenelement |
| 10 | Gewinde (Schraubenelement) |
| 11 | Gewinde (Klemmelement) |
| 12 | Öffnung (Montageelement) |
| 13 | Öffnung (Halterung) |
| 14 | Ende (Klemmelement) |
| 15 | Ende (Klemmelement) |
| 16 | Innenwand (Befestigungsschiene) |
| 17 | Führung |
| 18 | Vorderwand |
| 19 | Rückwand |
| 20 | Seite (Halterung) |
| 21 | Seite (Halterung) |
| 22 | Rückwandabschnitt |
| 23 | Seite (Halterung) |
| 24 | Seite (Halterung) |
| 25 | Führungsabschnitt oder -steg |
| 26 | Mittelklemme |
| 27 | Dachhaken |
| 28 | Gebäudedach |
| 29 | Solarmodul |
| 30 | Solarmodulhalterung |
| 31 | obere Stufe (Solarmodulhalterung) |
| 32 | untere Stufe (Solarmodulhalterung) |
| 33 | Bodenabschnitt (Mittelklemme) |
| 34 | Seitenabschnitt (Mittelklemme) |
| 35 | Halteabschnitt (Mittelklemme) |
| 36 | Federelement |
| 37 | Riffelung |
| 38 | Schraubenkopf |
| 39 | Abschnitt (Montageelement) |
| 40 | Abschnitt (Montageelement) |

## Patentansprüche

1. Befestigungssystem (1) zum Befestigen eines Montageelements (4) in einer Aufnahme (7) einer Befestigungseinrichtung (2), insbesondere in einem Aufnahmekanal (7) einer Befestigungsschiene (3) zum Befestigen von Solarmodulen (29), aufweisend:
eine Halterung (5), in welcher ein Klemmelement (6) drehbar aufgenommen ist, wobei das Klemmelement (6) in der Halterung (5) zwischen einer Entriegelungsposition, in welcher die Halterung (5) mit dem Klemmelement (6) in die Aufnahme (7) einführbar ist, und einer Verriegelungsposition drehbar ist, in welcher die Halterung (5) mit dem Klemmelement (6) in der Aufnahme (7) verklemmbar oder verriegelbar ist.

2. Befestigungssystem nach Anspruch 1,
**dadurch gekennzeichnet,**
**dass** das Klemmelement (6) eine Gewindeöffnung (8) aufweist in welche ein Schraubenelement (9) mit einem Gewinde (10) einbringbar ist, wobei ein Gewinde (11) der Gewindeöffnung (8) von dem Gewinde (10) des Schraubenelements (9) derart verschieden ist, dass das Schraubenelement (9) mit seinem Gewinde (10) in das Gewinde (11) der Gewindeöffnung (8) einformbar oder einarbeitbar ist zum Breitstellen einer Verbindung mit dem Klemmelement (6), die ausreichend fest ist, dass das Klemmelement (6) in die Verriegelungsposition drehbar ist durch Drehen des Schraubenelements (9).

3. Befestigungssystem nach Anspruch 1 oder 2,
**dadurch gekennzeichnet,**
**dass** das Klemmelement (6) in seiner Verriegelungsposition mit der Aufnahme (7) eine Reibschlussverbindung bildet.

4. Befestigungssystem nach einem der vorstehenden Ansprüche,
**dadurch gekennzeichnet,**
**dass** die Halterung (5) eine Vorderwand (18) mit einer Öffnung (13) aufweist, welche derart ausgebildet ist, dass ein Schraubenelement (9) oder ein Schraubenelement (9) und ein darum angeordnetes Federelement (36) hindurchführbar sind, wobei das Federelement (36) vorzugsweise an dem Klemmelement (6) abstützbar ist und insbesondere eine Spiralfeder ist.

5. Befestigungssystem nach Anspruch 4,
**dadurch gekennzeichnet,**
**dass** die Halterung eine Rückwand (19) aufweist, die auf beiden Seiten (20, 21) mit der Vorderwand (18) verbunden ist und wobei an der Vorderwand (18) und/oder Rückwand (19) eine Führung (17) vorgesehen ist zum Führen des Klemmelements (6) zwischen seiner Verriegelungsposition und seiner Entriegelungsposition.

6. Befestigungssystem nach Anspruch 5,
**dadurch gekennzeichnet,**
**dass** die Führung (17) wenigstens einen Führungsabschnitt (25) auf der Vorderwand (18) und/oder Rückwand (19) der Halterung (5) aufweist, wobei die Höhe (H) des Führungsabschnitts (25) vorzugsweise derart gewählt ist, dass kein Spalt oder ein definierte Spalt (S) zwischen der Halterung (5) und dem Klemmelement (6) ausgebildet ist.

7. Befestigungssystem nach einem der vorstehenden Ansprüche,
**dadurch gekennzeichnet,**
**dass** die Halterung auf zwei gegenüberliegenden Seiten (23, 24) derart teilweise geöffnet ausgebildet ist, dass das Klemmelement (6) mit seinen beiden Enden (13, 14) aus den Seiten (23, 24) in seine Verriegelungsposition herausdrehbar und das Klemmelement (6) von wenigstens einer der Seiten (23, 24) in die Halterung (5) einführbar ist zur Montage darin.

8. Befestigungssystem nach einem der vorstehenden Ansprüche,
**dadurch gekennzeichnet,**
**dass** die Halterung (5) aus einem Kunststoffmaterial, insbesondere POM-Material und/oder einem Gleitlagermaterial, und/oder das Klemmelement (6) aus Metall hergestellt ist.

9. Befestigungssystem nach einem der vorstehenden Ansprüche,
**dadurch gekennzeichnet,**
**dass** das Klemmelement (6) die Form eines Parallelogramms oder Rhomboids aufweist.

10. Befestigungssystem nach einem der vorstehenden Ansprüche,
**dadurch gekennzeichnet,**
**dass** das Klemmelement (6) in seiner Entriegelungsposition vollständig in der Halterung (5) aufnehmbar ist.
